# EUROPÄISCHE PATENTSCHRIFT

(11) **EP 0 783 601 B1**
(45) Veröffentlichungstag und Bekanntmachung des Hinweises auf die Patenterteilung: **03.05.2000**
(21) Anmeldenummer: 96925586.8
(22) Anmeldetag: 30.07.1996
(51) Int. Cl.: D01F 2/00, C08J 5/18, C08L 1/02

(54) **CELLULOSEFASER**
CELLULOSE FIBRE
FIBRE EN CELLULOSE

(30) Priorität: 11.08.1995 AT 1367959
(43) Veröffentlichungstag der Anmeldung: 16.07.1997
(73) Patentinhaber: LENZING AKTIENGESELLSCHAFT, 4860 Lenzing (AT)
(72) Erfinder: FIRGO, Heinrich, A-4840 Vöcklabruck (AT); SEIDL, Sigrid, A-4863 Seewalchen (AT); BARTSCH, Peter, A-4861 Schörfling (AT); KÖLL, Berndt, A-4860 Lenzing (AT); MÜLLEDER, Eduard, A-4030 Linz (AT)
(74) Vertreter: Schwarz, Albin, Dr.
(86) Internationale Anmeldenummer: AT9600137
(87) Internationale Veröffentlichungsnummer: WO9707266

(56) Entgegenhaltungen:
- EP-A- 0 538 977
- EP-A- 0 691 426
- EP-A- 0 692 558
- EP-A- 0 692 559
- EP-A- 0 703 305
- WO-A-92/07124
- WO-A-94/09191
- WO-A-94/20656
- WO-A-94/24343
- WO-A-95/00697
- WO-A-95/28516
- WO-A-95/30043

## Beschreibung

Die vorliegende Erfindung betrifft einen neuen Celluloseformkörper und ein Verfahren zur Herstellung dieses Celluloseformkörpers. Die vorliegende Erfindung betrifft insbesondere eine neue Cellulosefaser und eine neue Cellulosefolie, die eine vorbestimmte Fibrillierungsneigung aufweisen.

Als Alternative zum Viskoseverfahren wurden in den letzten Jahren eine Reihe von Verfahren beschrieben, bei denen Cellulose ohne Bildung eines Derivats in einem organischen Lösungsmittel, einer Kombination eines organischen Lösungsmittels mit einem anorganischen Salz oder in wässerigen Salzlösungen gelöst wird. Cellulosefasern, die aus solchen Lösungen hergestellt werden, erhielten von der BISFA (The International Bureau for the Standardisation of man made Fibres) den Gattungsnamen Lyocell. Als Lyocell wird von der BISFA eine Cellulosefaser definiert, die durch ein Spinnverfahren aus einem organischen Lösungsmittel erhalten wird. Unter "organisches Lösungsmittel" wird von der BISFA ein Gemisch aus einer organischen Chemikalie und Wasser verstanden.

Bis heute hat sich jedoch nur ein einziges Verfahren zur Herstellung einer Cellulosefaser der Gattung Lyocell bis zur industriellen Realisierung durchgesetzt. Bei diesem Verfahren, im folgenden als Aminoxidverfahren bezeichnet, wird als Lösungsmittel ein tertiäres Aminoxid, insbesondere N-Methylmorpholin-N-oxid (NMMO), verwendet. Ein solches Verfahren ist z.B. in der US-A - 4,246,221 beschrieben und liefert Fasern, die sich durch eine hohe Festigkeit, einen hohen Naßmodul und durch eine hohe Schlingenfestigkeit auszeichnen.

Eine charakteristische Eigenschaft der Lyocell-Fasern ist ihre ausgeprägte Neigung, im nassen Zustand zu fibrillieren. Unter Fibrillierung wird das Aufbrechen der nassen Faser in Längsrichtung bei mechanischer Beanspruchung im nassen zustand verstanden, wodurch die Faser ein haariges, pelziges Aussehen erhält. Als Ursache für die Fibrillierung wird angenommen, daß die Faser aus in Faserrichtung angeordneten Fibrillen besteht, zwischen denen nur in geringem Ausmaß eine Quervernetzung vorhanden ist.

Die WO 92/14871 beschreibt ein Verfahren zur Herstellung einer Faser mit verringerter Fibrillierneigung. Diese wird erzielt, indem alle Bäder, mit denen die frisch gesponnene Faser vor der ersten Trocknung in Berührung kommt, einen pH-Wert von maximal 8,5 aufweisen.

Die WO 92/07124 beschreibt ebenfalls ein Verfahren zur Herstellung einer Faser mit verringerter Fibrillierneigung, gemäß dem die frisch gesponnene, also noch nicht getrocknete Faser mit einem kationisierbaren Polymer behandelt wird. Als derartiges Polymer wird ein Polymer mit Imidazol- und Azetidin-Gruppen genannt. Zusätzlich kann noch eine Behandlung mit einem emulgierbaren Polymer, wie z.B. Polyethylen oder Polyvinylacetat, oder auch eine Vernetzung mit Glyoxal erfolgen.

In einem bei der CELLUCON-Konferenz 1993 in Lund, Schweden, von S. Mortimer gehaltenen Vortrag wurde erwähnt, daß die Fibrillierneigung mit zunehmender Verstreckung ansteigt.

Zur Verringerung der Fibrillierungsneigung von Lyocell-Fasern sind schon einige Methoden publiziert worden:

So ist z.B. aus der WO 95/02082 der Anmelderin bekannt, daß die Fibrillierung durch bestimmte Kombinationen von Spinnparametern verringert werden kann.

Weiters ist bekannt, daß die Fibrillierungseigenschaften von Lyocell-Fasern durch chemische Vernetzung verbessert werden können. So beschreibt z.B. die EP-A- 0 538 977 die Vernetzung von Lyocell-Fasern mit chemischen Reagentien, die mit Cellulose reagieren können, und zwar sowohl im niemals getrockneten Zustand, also bei der Faserherstellung, als auch im getrockneten Zustand, also im wesentlichen während der textilen Veredelung der textilen Flächengebilde.

Die Vernetzung von Lyocell-Fasern während der textilen Veredelung hat den prinzipiellen Nachteil, daß für den Ausrüster zusätzliche Schritte entstehen, die zu zusätzlichen Kosten führen, und daß die Anwendung solcher zusätzlicher Schritte auch einschränkend auf die Vielzahl der herstellbaren textilen Flächengebilde wirkt, was wiederum zu einer Beeinträchtigung der Vermarktungsfähigkeit der Lyocell-Fasern führt. Ein weiterer prinzipieller Nachteil der Behandlung von Lyocell-Fasern in bereits einmal getrocknetem Zustand besteht darin, daß die Zugänglichkeit der Fasern für Vernetzungschemikalien besonders nach dem ersten Trocknungsschritt gegenüber dem Zustand, den sie frisch gesponnen aufweisen, wesentlich reduziert ist, was dazu führt, daß größere Mengen an Chemikalien eingesetzt werden müssen.

Die in der oben genannten Patentanmeldung als Beispiel angeführten Vernetzungsreagentien besitzen als vernetzungsfähige Gruppen mit Halogen substituierte, stickstoffhaltige Ringstrukturen, die befähigt sind, bei alkalischen Bedingungen mit den Hydroxylgruppen der Cellulose zu reagieren. Weites sind Verbindungen mit Vinylsulfongruppen oder deren Vorläufern beschrieben. Auch diese Verbindungen reagieren im wesentlichen nur bei Zugabe von Alkali oder benötigen Alkali als Neutralisationsreagens für abgespaltene Säuren. Die in dieser Patentanmeldung vorgeschlagenen Verfahrensweisen zur Vernetzung von niemals getrockneten Lyocell-Fasern haben insofern gravierende Nachteile, als sie in einem kontinuierlichen Faser-Nachbehandlungsprozeß nur sehr schwer und mit hohem Aufwand durchzuführen sind. Bei Verwendung sehr reaktionsfähiger Verbindungen der angeführten Verbindungsklassen ist eine getrennte Aufbringung der Vernetzersubstanzen von den basischen Verbindungen erforderlich, die zur Auslösung der Reaktion mit der Cellulose notwendig sind. Werden weniger reaktive Verbindungen verwendet, ist zwar häufig eine gleichzeitige Aufbringung der Vernetzungsreagentien und des Alkali möglich, in diesem Fall muß jedoch ein Temperaturschritt durchgeführt werden, was in der zitierten Patentanmeldung durch "Dämpfen" erreicht wird. Damit ist ein gravierender Nachteil des angeführten Patentes eine Erhöhung der Anzahl der Nachbehandlungsschritte, was mit wesentlichen Mehrkosten vor allem bei der Errichtung einer solchen Faserproduktionsanalage verbunden ist.

Mit dieser Verfahrensweise ist aber ein weiterer Nachteil verbunden. Bei der Reaktion der halogenierten, stickstoffhaltigen Ringe bzw. der Vinylsulfone oder deren Vorläufersubstanzen entstehen bei der Vernetzungsreaktion Salze, die anschließend aus der Faser ausgewaschen werden müssen, außerdem müssen auch überschüssige und nicht mit der Cellulosefaser abreagierte Restchemikalien ausgewaschen werden. Dies bedeutet, daß in einem kontinuierlichen Faser-Herstellungsprozeß noch ein weiterer Nachbehandlungschritt notwendig ist, der weitere Investitionskosten und Betriebskosten verursacht und zusätzlich noch Probleme mit belastetem Abwasser mit sich bringt.

In der WO 94/24343 der Anmelderin werden ähnliche Vorgangsweisen zur Vernetzung der Lyocell-Faser gegen die Fibrillierung vorgeschlagen, wobei dort die Verwendung von alkalischen Puffern und eine Bestrahlung mit elektromagnetischen Wellen als besonders vorteilhaft beschrieben wird.

Aus der EP-A-0 691 426 ist ein Verfahren bekannt, bei dem Cellulosefasern mit einem Reagens mit mindestens 2 funktionellen Gruppen, beispielsweise aliphatischen Aldehydgruppen, die mit Cellulose reagieren, behandelt werden, um die Fibrillierneigung der Fasern zu vermindern. Ein funktionelle Gruppen tragendes Polymer, beispielsweise Polyethylenglykol oder mit Aminogruppen modifiziertes Polyethylenglykol kann zusätzlich zu dem Reagens eingesetzt werden. Die funktionellen Gruppen des Reagens können auch mit den funktionellen Gruppen des Polymers reagieren.

Aus der WO-A-95/00697 ist ein Verfahren bekannt, bei dem Celluloseformkörper mit einem Vernetzungsmittel mit geringem oder keinem Formaldehydgehalt, vorzugsweise N-Methylolharzen, behandelt werden. Zum Vernetzen bzw. Härten werden die Formkörper anschließend erhitzt.

Aus der WO-A-94/09191 ist bekannt, daß eine nach dem Lyocell-Verfahren hergestellte Cellulosefaser mit einem als Vernetzungsmittel dienenden Reagens behandelt wird, beispielsweise mit einem Reagens, das elektrophile Kohlenstoff-Kohlenstoff-Doppelbindungen, an der gegebenenfalls eine elektronenabziehende Gruppe angebracht ist, enthält, wobei die Cellulose mit der Doppelbindung unter Ausbildung einer Etherbindung reagiert. Weitere Beispiele des als Vernetzungsmittel dienenden Reagens sind Substanzen, die einen Precursor einer elektrophilen Kohlenstoff-Kohlenstoff-Doppelbindung oder einen elektrophilen heterozyklischen Ring enthalten. Die Vernetzung erfolgt unter alkalischen Bedingungen und vorzugsweise durch Erwärmen.

In der WO 94/20656 wird beschrieben, daß die Fibrillierung von Lyocell-Fasern durch Vernetzung mit konventionellen Vernetzungschemikalien, die üblicherweise zur Verbesserung der Knitterwinkel von Cellulosetextilien verwendet werden, verringert wird, ohne daß gleichzeitig die Anfärbbarkeit der Fasern zurückgeht, wenn man die Vernetzung bei gleichzeitiger Anwesenheit von flexiblen, linearen Polymeren durchführt. Im wesentlichen werden konventionelle N-Methylolharze (Formaldehyd-arm) und die üblichen sauren Katalysatoren verwendet. Die Methode wird sowohl zur Anwendung an der getrockneten als auch an der niemals getrockneten Faser als zum Erfolg führend beschrieben.

Auch diese Verfahrensweise hat Nachteile, die einen anderen Vernetzungsweg wünschenswert erscheinen lassen. Die üblicherweise für die Verbesserung der Naßknitterwinkel angewendeten Methylolharze brauchen nämlich zur Reaktion mit den OH-Gruppen der Cellulose ziemlich hohe Reaktionstemperaturen, und zwar in der Regel 120°C bis 160°C, wenn die Reaktion mit ausreichender Geschwindigkeit ablaufen soll. Auch in der zitierten internationalen Patentanmeldung werden sehr hohe Temperaturen zur Fixierung der Vernetzungsmittel angewendet. Dies führt immer zu einem mehr oder weniger großen Verlust an Faserfestigkeit, aber vor allem zu einem Verlust an Faserdehnung und Schlingenfestigkeit, und die Faser wird spröde. Außerdem sind in der genannten Patentanmeldung keine vergleichenden physikalischen Faserdaten vor und nach der Vernetzungsreaktion angeführt. Reaktionen mit den zitierten N-Methylolverbindungen bei niedriger Temperatur und damit höherer Faserfeuchtigkeit, die keine so gravierenden Festigkeits- und Dehnungsverluste bewirken, brauchen üblicherweise sehr lange Reaktionszeiten und sind damit für kontinuierliche Faserproduktionsprozesse kaum geeignet.

Weiters ist bekannt, daß man Cellulosefasergewebe bei geeigneter Vorbehandlung und neutralen pH-Werten und ohne Salzzugabe mit konventionellen Reaktivfarbstoffen färben kann (Lewis et al., JSDC Band 107, März 1991 und JSDC Band 109, November 1993). Die Vinylsulfon- bzw. die Halogen-haltigen Stickstoffheterozyklen, die normalerweise als Anker-Gruppen unter alkalischen Bedingungen mit den Hydroxygruppen der Cellulose reagieren, reagieren mit Aminogruppen ohne Zugabe von Alkali, da sie wesentlich stärkere Nukleophile als die Hydroxygruppen darstellen.

Aus der EP-A-0 703 305 ist ein Verfahren zur Herstellung modifizierter Viskosefasern bekannt, bei dem der Viskoselösung Proteine mit einem Molekulargewicht größer 50000 zugesetzt werden, wodurch erreicht wird, daß aus solchen Fasern hergestellte Textilien salz- und alkaliarm mit Farbstoffen gefärbt werden können. Die Proteine haften hierbei an den Viskosefasern.

Verfahren dieser Art sind auch aus der EP-A-0 692 558 und EP-A-0 692 559 bekannt. Bei diesen Verfahren werden der Viskoselösung eine polymere Aminverbindung mit seitengruppenständigen primären, sekundären und tertiären Amingruppen bzw. ein Polyethylenimin oder ein modifiziertes Polyethylenimin zugegeben. Auch der Spinnmasse für ein Lösungsspinnverfahren können diese Substanzen zugegeben werden.

In "Chemical Aftertreatment of Textiles" (H. Mark, N.S. Wooding, S.M. Atlas), Seite 414, wird beschrieben, daß quaternisierte Diethylaminocellulose in Hydroxyform bei Raumtemperatur naß vernetzt wurde.

In der italienischen Patentanmeldung 690,926 (1965) wird das innere Salz des Trissulfatoethylsulfoniums zur alkalischen Vernetzung von Gelatine beschrieben. Die Reaktion läuft bei pH 7 und bei einer Temperatur von 50°C ab.

Es ist Aufgabe der Erfindung, durch Vernetzungsreaktionen einen Lyocell-Formkörper herzustellen, dessen Fibrillierungseigenschaften reduziert und gezielt steuerbar sind, wobei das Herstellungsverfahren die geschilderten Nachteile der bekannten Vernetzungsverfahren nicht aufweist. Eine weitere Aufgabe der Erfindung ist es, Fasern zur Verfügung zu stellen, die im textilen Flächengebilde verbesserte Naßknitterwinkel aufweisen und die daher die Herstellung von Lyocell-Textilien völlig ohne die Verwendung der üblichen Hochveredelungschemikalien in der textilen Veredelung ermöglichen.

Dieses Ziel wird erfindungsgemäß mit einem Verfahren zur Herstellung eines Celluloseformkörpers nach dem Aminoxidverfahren, bei welchem eine Suspension von Cellulose in einem wäßrigen tertiären Aminoxid in eine spinnbare Lösung übergeführt, durch eine Spinndüse extrudiert und der erhaltene Formkörper durch ein Fällbad geführt wird, erreicht, welches Verfahren eine Vernetzungsreaktion umfaßt und dadurch gekennzeichnet ist, daß
(a) eine Suspension eingesetzt wird, welche eine Substanz enthält, die mit der Cellulose reagieren und funktionelle Gruppen einbringen kann, welche Gruppen stärker nukleophil sind als die Hydroxygruppen der Cellulose; und/oder
(b) eine Cellulose eingesetzt wird, welche funktionelle Gruppen trägt, die stärker nukleophil sind als die Hydroxygruppen der Cellulose, und/oder
(c) eine Suspension eingesetzt wird, die ein Polymer enthält, welches funktionelle Gruppen trägt, die stärker nukleophil sind als die Hydroxygruppen der Cellulose, und/oder
(d) der spinnbaren Lösung eine Substanz zugegeben wird, die mit der Cellulose reagieren und funktionelle Gruppen einbringen kann, welche Gruppen stärker nukleophil sind als die Hydroxygruppen der Cellulose; und/oder
(e) der spinnbaren Lösung ein Polymer zugegeben wird, welches funktionelle Gruppen trägt, die stärker nukleophil sind als die Hydroxygruppen der Cellulose.

Das Ziel wird erfindungsgemäß auch mit einem Verfahren zur Herstellung eines Celluloseformkörpers nach dem Aminoxidverfahren erreicht, bei welchem eine Suspension von Cellulose in einem wäßrigen tertiären Aminoxid in eine spinnbare Lösung übergeführt, durch eine Spinndüse extrudiert und der erhaltene Formkörper durch ein Fällbad geführt wird, welches Verfahren dadurch gekennzeichnet ist, daß
(a) in den erhaltenen Formkörper funktionelle Gruppen eingebracht werden, die stärker nukleophil sind als die Hydroxygruppen der Cellulose, oder
(b) der erhaltene Formkörper mit einem Oligomer oder einem Polymer in Kontakt gebracht wird, das funktionelle Gruppen trägt, welche stärker nukleophil sind als die Hydroxygruppen der Cellulose, worauf
der Formkörper mit einem Vernetzungsmittel behandelt wird, welches mit den nukleophilen Gruppen reagiert, mit der Maßgabe, daß es mit den Hydroxygrupen der Cellulose im wesentlichen nicht reagiert.

Der Begriff "Formkörper" soll für die Zwecke der vorliegenden Beschreibung und Patentansprüche insbesondere Fasern und Folien bedeuten. Wenn im folgenden "Fasern" genannt werden, so sind damit Fasern, Folien und auch andere Formkörper gemeint.

Zum Erhalt der bekannt guten physikalischen Faserdaten, wie hohe Naßfestigkeit, hohe Schlingenfestigkeit und hoher Naßmodul, wird die Faser erfindungsgemäß bevorzugt in feuchtem Zustand vernetzt. Bevorzugt sind Feuchtigkeitsgehalte von 40% bis zu freier Quellung, die dann auftritt, wenn die Faser in langer Flotte frei schwimmt.

Bei einer besonders bevorzugten Ausführungsform hat die Faser während der Vernetzungsreaktion einen Feuchtigkeitsgehalt zwischen 70% und 150%. Die Vernetzung wird dadurch zustande gebracht, daß in die Faser bereits vor der Behandlung mit dem Vernetzungsreagens Gruppen eingebracht werden, die stärker nukleophil als die Hydroxygruppen der Cellulosefaser sind, welche Gruppen ohne Zugabe von weiterem Alkali mit dem Vernetzungsmittel reagieren. Die Vernetzungsmittel sind an sich bekannte Chemikalien, die bei der textilen Veredelung von Cellulosetextilien verwendet werden. Im wesentlichen handelt es sich um Moleküle, die die bekannten reaktiven Gruppen der Reaktivfarbstoffe tragen, die aber sowohl farbig als auch nicht farbig sein können.

Natürlich kann der Fachmann auch andere als die hier angeführten Vernetzungschemikalien verwenden, und zwar sowohl kommerziell erhältliche als auch neue, die eigens für die Vernetzung von Lyocell-Fasern synthetisiert werden. Die Verbindungen können mindestens zwei gleiche oder voneinander verschiedene, mit nukleophilen Gruppen angreifbare reaktive Gruppen enthalten, können aber auch mehrere solche Gruppen besitzen. Auch reaktive Polymere mit einer Vielzahl von nukleophilen Gruppen sind möglich.

Die reaktiven Gruppen sind vorzugsweise Vinylsulfongruppen oder deren Vorläuferstrukturen, oder halogenierte Stickstoffheterozyklen, insbesondere Triazinringe, die ein oder zwei Halogenatome aufweisen, und auch Epoxidgruppen. Die nukleophilen Gruppen, die vor der Vernetzung in die Cellulosefaser eingeführt werden, sind vorzugsweise primäre oder sekundäre Aminogruppen, die mit den angeführten Vernetzungsreagentien sehr leicht, meist schon bei Raumtemperatur, reagieren, aber auch andere, dem Fachmann geläufige, nukleophile Gruppen, wie z.B. Thiolgruppen, ergeben den gleichen Effekt. Die Reaktion findet in den erfindungsgemäßen Vernetzungsreaktionen nicht zwischen den Vernetzermolekülen und den Hydroxygruppen der Cellulose statt, sondern zwischen den Vernetzermolekülen und den stärker nukleophilen Gruppen.

Für die erfindungsgemäße Einbringung der nukleophilen, vernetzungsfähigen Gruppen, gibt es somit mehrere Möglichkeiten:

a) Stand der Technik im Aminoxidverfahren ist die Herstellung der Celluloselösung durch Herstellung eines zweiphasigen Gemisches aus Zellstoff und wäßrigem NNMO in einer Konzentration und bei einer Temperatur, bei der noch keine Auflösung der Cellulose stattfindet, und durch anschließendes Entfernen des überschüssigen Wassers bei erhöhter Temperatur, unter Vakuum und unter kräftiger Scherung des Gemisches, wobei bei Erreichen einer Rohkonzentration, die im wesentlichen dem NNMO-Monohydrat entspricht, die Auflösung der Cellulose erzwungen wird. Zur Einbringung der nukleophilen Gruppen kann man dem zweiphasigen Cellulose/NNMO-Gemisch cellulosereaktive Substanzen, die unter alkalischen Bedingungen reagieren, beifügen. Eine bevorzugte Ausführungsform ist die Zugabe von primären und sekundären Aminogruppen-haltigen Epoxidverbindungen an dieser Stelle, die dann während der Lösungsherstellung mit der Cellulose zu aminogruppenhaltiger Cellulose reagiert. Diese Reaktion kann noch zusätzlich mit kleinen Mengen Alkali katalysiert werden.

Natürlich kann der Fachmann an dieser Stelle auch andere, alkalisch ablaufende Substitutionsreaktionen an der Cellulose durchführen, die zu nukleophilen Reaktionszentren in der Cellulose führen. So können z.B. statt der Epoxyverbindungen auch die entsprechenden Epichlorhydrine eingesetzt werden und dementsprechend höhere Mengen an Alkali, wobei diese Vorgangsweise wegen der Salzbildung während der Reaktion zu erhöhtem Reinigungsaufwand bei der Lösungsmittelrückgewinnung führt. Weiters ist auch die Zugabe von Verbindungen mit aktivierter Doppelbindung, die zusätzlich Aminogruppen enthalten, möglich. Selbst die Zugabe von aminogruppenhaltigen (sekundäre und primäre) cellulosereaktiven Polymeren an dieser Stelle ist zielführend.

b) Im Zuge der erfindungsgemäßen Lösungsherstellung können statt einer Derivatisierung des eingesetzten Zellstoffes auch Polymere, die stärker nukleophile Gruppen als die Cellulose besitzen, zugemischt werden, welche Polymere bei der Fällung der Celluloselösung im Spinnbad gleichzeitig mit der Cellulose ausgefällt und in den Cellulosefäden inkorporiert werden. Beispiele für solche Substanzen sind Chitosane, aminogruppenhaltige Stärkederivate, aminogruppenhaltige Cellulosederivate, aber auch natürliche Proteine, wie Gelatine und ähnliche.

Der Fachmann wird bei der Auswahl dieser aminogruppenhaltigen Polymere darauf achten, daß sich die Polymere in der NNMO/Celluloselösung gut lösen oder zumindest gut verteilen lassen, und daß sie im Spinnbad weitgehend in der frisch gefällten Faser eingeschlossen werden, da auch hier sonst mit erhöhtem Aufwand für Lösungsmittelrückgewinnung und Reinigung zu rechnen ist. Besonders geeignet sind demnach schlecht wasserlösliche Polymere und/oder Polymere mit hoher Substantivität zu Cellulose, z.B. Polymere, die zusätzlich zu den reaktiven Aminogruppen noch quaternäre Gruppen tragen.

c) Die Aminogruppen (oder sonstige stärker nukleophile Gruppen als die Hydroxygruppen der Cellulose) können auch in der Fasernachbehandlung nach der Entfernung des nach der Faserregenerierung anhaftenden NMMOs in die niemals getrocknete Faser eingebracht werden. Die Faser kann z.B. im niemals getrockneten Zustand mit einer sauren Lösung von Chitosanen behandelt werden, das durch anschließende Behandlung durch basisch eingestelltes Wasser in und auf der Faser unlöslich gemacht wird. Die so erhaltenen, mit nukleophilen Gruppen modifizierten Fasern können dann erfindungsgemäß mit den Vernetzungschemikalien umgesetzt werden.

Eine andere Art der Aufbringung von nukleophile Gruppen enthaltenden Polymeren in der Fasernachbehandlung betrifft die Verwendung von Polymeren und Oligomeren, die eine hohe Substantivität zur Cellulose aufweisen. Solche polymere Moleküle tragen zusätzlich zu den nukleophilen Gruppen noch kationische Gruppen zur Erhöhung der Substantivität. Auch die solcherart erhaltenen, niemals getrockneten Cellulosefasern, die reaktive, nukleophile Gruppen enthalten, können anschließend erfindungsgemäß mit den beschriebenen Vernetzermolekülen umgesetzt werden.

Durch die Einbringung einer genau definierten Menge von Gruppen, welche stärker nukleophil sind als die Hydroxygruppen der Cellulose, können neue Cellulosefasern hergestellt werden, deren Vernetzungsgrad gezielt eingestellt werden kann. Der Vernetzungsgrad bestimmt die Fibrillierneigung in der Weise, daß ein hoher Vernetzungsgrad eine Faser mit geringer Fibrillierneigung, und umgekehrt ein geringer Vernetzungsgrad eine Faser mit hoher Fibrillierneigung ergibt. Die vorliegende Erfindung betrifft somit auch vernetzte Cellulosefasern, die eine im voraus bestimmte Fibrillierneigung aufweisen und aus den neuen, unvernetzten Cellulosefasern hergestellt werden können.

Die Vernetzung der Cellulosefasern kann auch nach Trocknung der unvernetzten Cellulosefasern vorgenommen werden.

Mit den nachfolgenden Beispielen wird die Erfindung noch näher erläutert.

### Beispiel 1

Polyacrylamid (2 Masse%, bezogen auf Cellulose; Hersteller: Fa. Sigma Aldrich) mit einer Molmasse von 5.000.000 - 6.000.000 g/Mol wurde in einer 50% Lösung von NMMO unter Rühren gelöst.

Die den NMMO/Wasser/Polyacrylamid-Anteilen adäquate Zellstoffmenge zur Herstellung einer Spinnmasse mit einem Cellulosegehalt von 15 Masse% wurde in einem Knetapparat mit der NMMO/Wasser/Polyacrylamidlösung vermengt. Unter Erhitzen und Abdampfen von Wasser unter vermindertem Druck wurde die Spinnmasse hergestellt.

Die erhaltene Spinnmasse wurde in einem Spinnapparat (Spinntemperatur: 115°C; Lochdurchmesser: 100 µm; Luftspalt (Abstand zwischen Düse und Spinnbad): 3 cm; Klima im Luftspalt: 30 g H₂O/kg Luft) zu einem Filament (Titer: 1,7 dtex) versponnen. Dieses Filament diente als Probematerial für Vernetzungen.

Der Stickstoffgehalt des auf diese Weise erhaltenen Fasermaterials war 0,21 g/kg Faser. Von dieser Faser wurde der Scheuerwert bestimmt (siehe unten). Ferner wurde sie mit einer Vernetzerlösung (siehe unten) behandelt. Auch von der vernetzten Faser wurde der Scheuerwert bestimmt.

### Vernetzung

Die Faser wurde getrocknet und 10 Minuten bei Raumtemperatur mit einer Glyoxallösung (Konzentration 5 g/l; pH 7) imprägniert und auf 120% Restfeuchte abgepreßt. Anschließend wurde sie 10 Minuten bei 100°C erhitzt, dann gewaschen und bei 60°C getrocknet.

### Bestimmung des Scheuerwertes

Zur Bestimmung des Scheuerwertes wurde die Faser über eine drehbare Welle gelegt, die mit einem feuchten Viskosefasergewebe bespannt war. Die Faser wurde dabei unter einem Winkel von 50° zur Drehachse der Welle fix eingespannt und am unteren Ende mit einem Vorspanngewicht von 70 mg beschwert.

Die Welle wurde mit einer Umdrehungszahl von 500 UpM gedreht, und die Zeit bis zum Riß des Fadens wurde gemessen. Aus dieser Zeit wurde die Anzahl der Umdrehungen errechnet, die erforderlich waren, um den Faden durchzuscheuern. Aus der Zahl der Umdrehungen kann daher auf die Vernetzungsstärke rückgeschlossen werden, wobei die Vernetzung naturgemäß umso stärker ist, je mehr Umdrehungen erforderlich sind, die Faser durchzuscheuern.

Zur Bestimmung des Scheuerwertes wurden jeweils 20 Filamentproben untersucht und der Mittelwert gebildet, welcher noch durch den Titer der untersuchten Faser dividiert wurde. Der Scheuerwert besitzt somit die Dimension Umdrehungen/dtex.

In der nachfolgenden Tabelle 1 sind die Ergebnisse folgender 3 Fasern angegeben:
Faser (1), eine reine Cellulosefaser (Lyocell-Faser), ohne Zusatz von Polyacrylamid hergestellt, jedoch mit Glyoxal vernetzt;
Faser (2), eine Cellulose/Polyacrylamidfaser, nicht mit Glyoxal vernetzt;
Faser (3), eine Cellulose/Polyacrylamidfaser, mit Glyoxal vernetzt.

**Tabelle 1**

| Faser | | Scheuerwert |
|---|---|---|
| (1)* | Cellulosefaser (ohne Polyacrylamid; vernetzt) | 59 |
| (2)* | Cellulose/Polyacrylamidfaser (nicht vernetzt) | 49 |
| (3) | Cellulose/Polyacrylamidfaser (vernetzt) | 198 |

| | | |
|---|---|---|
| *Vergleichsbeispiel | | |

Der Tabelle 1 ist zu entnehmen, daß die Faser (3) den höchsten Scheuerwert aufweist und daß der erfindungsgemäß vorgesehene Zusatz von Polyacrylamid den Scheuerwert von 59 auf fast 200 steigert.

### Beispiel 2

Es wurde analog Beispiel 1 vorgegangen, mit der Maßgabe, daß die Spinnmasse ohne Polyacrylamid hergestellt wurde, und daß in die Spinnmasse vor dem Verspinnen 1,5% Polyethylenimin ("Lugalvan" G35, Hersteller: BASF; MG: 2000) eingebracht wurde.

Die Vernetzung wurde ebenfalls analog Beispiel 1 vorgenommen, jedoch mit trifunktionellem Epoxid (1% Lösung von 1,3,5-Triglycidylisocyanurat; Marke: Araldit; Hersteller: Ciba Geigy).

Die Ergebnisse der Scheuerprüfung (siehe Beispiel 1) sind in der nachfolgenden Tabelle 2 angegeben.

**Tabelle 2**

| Faser | | Scheuerwert |
|---|---|---|
| (4)* | Cellulose/Polyethyleniminfaser (nicht vernetzt) | 13,4 |
| (5) | Cellulose/Polyethyleniminfaser (vernetzt) | 41,0 |

| | | |
|---|---|---|
| *Vergleichsbeispiel | | |

### Beispiel 3

Einer Spinnmasse mit einem Cellulosegehalt von 12 Masse% wurde eine 50%ige wäßrige Polyethyleniminlösung zugegeben und gemäß Beispiel 1 zu Fasern versponnen. Die erhaltene Faser wies einen Stickstoffgehalt von 1,05% auf und wurde mit einer Lösung, die 2,4-Dichlor-6-aminobenzol-4'-sulfatoethylsulfon-s--triazin (10 g/l) und Soda (20 g/l) enthält, 2 Minuten imprägniert, auf 130% Restfeuchte abgepreßt und im Trockenschrank 10 Minuten bei 120°C erhitzt.

Diese mit Polyethylenimin modifizierte Faser zeigte gegenüber dem verwendeten Vernetzer und auch gegenüber anderen ähnlichen Vernetzern eine erhöhte Reaktivität.

Die Scheuerwerte wurden wie im Beispiel 1 beschrieben bestimmt und sind in der folgenden Tabelle 3 angegeben.

**Tabelle 3**

| Faser | | Scheuerwert |
|---|---|---|
| (6)* | Cellulose/Polyethyleniminfaser (nicht vernetzt) | 24,1 |
| (7) | Cellulose/Polyethyleniminfaser (vernetzt) | 100 |

| | | |
|---|---|---|
| *Vergleichsbeispiel | | |

### Beispiel 4

Eine Cellulosefaser (Lyocellfaser) wurde mit einer 0,5%igen essigsauren Chitosanlösung (pH 5) 10 Minuten bei 40°C imprägniert, auf 130% Restfeuchte abgepreßt, dann 5 Minuten bei 100°C im Trockenschrank erhitzt und schließlich ausgewaschen.

Die so mit Chitosan modifizierte Faser wurde mit einer Lösung, die 2,4-Dichlor-6-aminobenzol-4'-sulfatoethylsulfon-s-triazin (10 g/l) und Soda (20 g/l) enthielt, 2 Minuten imprägniert, auf 130% Restfeuchte abgepreßt und im Trockenschrank 10 Minuten bei 120°C erhitzt.

Diese mit Chitosan modifizierte Faser zeigte gegenüber dem verwendeten Vernetzer und auch gegenüber anderen ähnlichen Vernetzern eine erhöhte Reaktivität.

Die Scheuerwerte wurden wie im Beispiel 1 beschrieben bestimmt und sind in der folgenden Tabelle 4 angegeben.

**Tabelle 4**

| Faser | | Scheuerwert |
|---|---|---|
| (8)* | Cellulosefaser (vernetzt) | 366 |
| (9) | Cellulose/Chitosanfaser (vernetzt) | 1276 |

| | | |
|---|---|---|
| *Vergleichsbeispiel | | |

### Beispiel 5

Eine getrocknete Cellulosefaser (Lyocellfaser) wurde mit einer Lösung, die N-Hydroxymethylacrylamid (110 g/l) und Zinkchlorid (10 g/l) enthielt, 1 Minute bei Raumtemperatur imprägniert, anschließend auf 130% Restfeuchte abgepreßt, dann eine Stunde bei 60°C vorgetrocknet und 10 Minuten bei 150°C fixiert. Der Stickstoffgehalt der Faser betrug 0,38 Masse%.

Die mit dem N-Hydroxymethylacrylamid modifizierte Faser wurde mit einer 25%igen Ammoniaklösung eine Stunde gekocht, wobei eine Faser mit zusätzlichen funktionellen Gruppen erhalten wurde (0,96% N). Diese Faser wurde mit einer Lösung, die 2,4-Dichlor-6-aminobenzol-4'-sulfatoethylsulfon-s-triazin (10 g/l), aber kein Alkali, enthielt, gemäß Beispiel 3 vernetzt.

Die mit N-Hydroxymethylacrylamid modifizierte Faser zeigte gegenüber dem verwendeten Vernetzer und auch gegenüber anderen ähnlichen Vernetzern eine erhöhte Reaktivität.

Die Scheuerwerte wurden wie im Beispiel 1 beschrieben bestimmt und sind in der folgenden Tabelle 5 angegeben.

**Tabelle 5**

| Faser | | Scheuerwert |
|---|---|---|
| (10)* | Cellulosefaser (ohne Alkali vernetzt) | 50 |
| (11)* | aminogruppenhaltige Cellulosefaser (nicht vernetzt) | 6952 |
| (12) | aminogruppenhaltige Cellulosefaser (vernetzt) | 10306 |

| | | |
|---|---|---|
| *Vergleichsbeispiel | | |

### Beispiel 6

In einem Kneter (HKD-T der Firma IKA-Labortechnik) wurde aus 20 g Zellstoff, 308 g wäßrigem NMMO (50%ig) und 1 g Gelatine unter Abdampfen der überschüssigen Wassermenge eine Spinnmasse hergestellt.

Als Spinnapparat wurde ein in der Kunststoffverarbeitung gebräuchliches Schmelzindexgerät der Fa. Davenport verwendet. Dieses Gerät besteht aus einem beheizten, temperaturgeregelten Zylinder, in den die Spinnmasse eingefüllt wurde. Mittels eines Kolbens wurde die Spinnmasse durch die an der Unterseite des Zylinders angebrachte Spinndüse (Lochdurchmesser: 100 µm) extrudiert (Spinnmasse: 100°C; Ausstoß: 0,025 g/Loch/min). Als Luftspalt wurde 40 mm gewählt. Die erhaltene Faser wurde mit Wasser gewaschen und unmittelbar danach, also im sogenannten nie getrockneten Zustand, vernetzt.

Zur Vernetzung wurde 1g Faser in Strangform bei Raumtemperatur in 100 ml einer wäßrigen Lösung aus dem inneren Salz des Dinatrium-tris(β-sulfatoethyl)sulfoniums (2,7 g/l; pH 8) 5 Minuten lang imprägniert und anschließend auf 140% Restfeuchte abgequetscht. Danach wurde die Faser über Nacht bei 60°C getrocknet.

Die erhaltene Faser wurde mit dem nachfolgend beschriebenen Schütteltest auf ihre Fibrillierungsneigung untersucht:
8 Fasern mit einer Länge von 20 mm wurden zusammen mit 4 ml Wasser in ein 20 ml Probenfläschchen gegeben und 9 Stunden auf einem Laborschüttelgerät der Type RO-10 der Fa. Gerhardt, Bonn (DE) auf Stufe 12 geschüttelt. Dann wurde die Fibrillierung der Fasern unter dem Mikrospkop durch Auszählen der gebildeten Fibrillen auf einer Faserlänge von 0,276 mm beurteilt. Eine Cellulosefaser der Gattung Lyocell bildete bei diesem Test 50 Fibrillen. Eine Cellulosefaser der Gattung Modal, die als wenig fibrillierend bekannt ist, zeigte bei diesem Test 1 bis 2 Fibrillen.

In der Tabelle 6 unten ist das Ergebnis des Schütteltests der Faser gemäß Beispiel 6 (Faser 14) sowie einer nicht vernetzten Cellulosefaser zum Vergleich angegeben.

### Beispiel 7

Es wurde analog Beispiel 6 vorgegangen, der Spinnmasse statt Gelatine jedoch 0,6 g Polyvinylamin zugegeben. Zur Herstellung des Polyvinylamins wurde Polyvinylaminhydrochlorid (Hersteller: Hoechst) neutralisiert und gefriergetrocknet.

Verspinnen, Vernetzen und auch der Test auf Fibrillierung wurden analog Beispiel 6 durchgeführt. Das Ergebnis ist der nachfolgenden Tabelle 6 zu entnehmen.

**Tabelle 6**

| Faser | | Fibrillenzahl |
|---|---|---|
| (13)* | Cellulosefaser (nicht vernetzt) | > 50 |
| (14) | mit Gelatine modif. Cellulosefaser (vernetzt) | 30 |
| (15) | mit Polyvinylamin modif. | |
| | Cellulosefaser (vernetzt) | 40 |

| | | |
|---|---|---|
| *Vergleichsbeispiel | | |

## Patentansprüche

1. Verfahren zur Herstellung eines Celluloseformkörpers nach dem Aminoxidverfahren, wobei eine Suspension von Cellulose in einem wäßrigen tertiären Aminoxid in eine spinnbare Lösung übergeführt, durch eine Spinndüse extrudiert und der erhaltene Formkörper durch ein Fällbad geführt wird, welches Verfahren eine Vernetzungsreaktion umfaßt, dadurch gekennzeichnet, daß
(a) eine Suspension eingesetzt wird, welche eine Substanz enthält, die mit der Cellulose reagieren und funktionelle Gruppen einbringen kann, welche Gruppen stärker nukleophil sind als die Hydroxygruppen der Cellulose; und/oder
(b) eine Cellulose eingesetzt wird, welche funktionelle Gruppen trägt, die stärker nukleophil sind als die Hydroxygruppen der Cellulose, und/oder
(c) eine Suspension eingesetzt wird, die ein Polymer enthält, welches funktionelle Gruppen trägt, die stärker nukleophil sind als die Hydroxygruppen der Cellulose, und/oder
(d) der spinnbaren Lösung eine Substanz zugegeben wird, die mit der Cellulose reagieren und funktionelle Gruppen einbringen kann, welche Gruppen stärker nukleophil sind als die Hydroxygruppen der Cellulose; und/oder
(e) der spinnbaren Lösung ein Polymer zugegeben wird, welches funktionelle Gruppen trägt, die stärker nukleophil sind als die Hydroxygruppen der Cellulose.

2. Verfahren zur Herstellung eines Celluloseformkörpers nach dem Aminoxidverfahren, wobei eine Suspension von Cellulose in einem wäßrigen tertiären Aminoxid in eine spinnbare Lösung übergeführt, durch eine Spinndüse extrudiert und der erhaltene Formkörper durch ein Fällbad geführt wird, dadurch gekennzeichnet, daß
(a) in den erhaltenen Formkörper funktionelle Gruppen eingebracht werden, die stärker nukleophil sind als die Hydroxygruppen der Cellulose, und/oder
(b) der erhaltene Formkörper mit einem Oligomer oder einem Polymer in Kontakt gebracht wird, das funktionelle Gruppen trägt, welche stärker nukleophil sind als die Hydroxygruppen der Cellulose, worauf
der Formkörper mit einem Vernetzungsmittel behandelt wird, welches mit den nukleophilen Gruppen reagiert, mit der Maßgabe, daß es mit den Hydroxygrupen der Cellulose im wesentlichen nicht reagiert.

3. Verfahren nach einem der Ansprüche 1 oder 2, dadurch gekennzeichnet, daß der Formkörper getrocknet wird.

4. Celluloseformkörper, erhältlich nach einem Verfahren gemäß einem der Ansprüche 1, 2 oder 3.

5. Verfahren nach einem der Ansprüche 1 oder 3, dadurch gekennzeichnet, daß der erhaltene Formkörper mit einem Vernetzungsmittel behandelt wird, welches mit den nukleophilen Gruppen reagiert, mit der Maßgabe, daß es mit den Hydroxygrupen der Cellulose im wesentlichen nicht reagiert.

6. Verfahren nach einem der Ansprüche 1, 2, 3 oder 5, dadurch gekennzeichnet, daß die funktionellen Gruppen primäre oder sekundäre Aminogruppen oder Thiolgruppen sind.

7. Verfahren nach Anspruch 6, dadurch gekennzeichnet, daß ein Vernetzungsmittel eingesetzt wird, das mindestens zwei Vinylsulfongruppen oder deren Vorläufer aufweist.

8. Verfahren nach Anspruch 6, dadurch gekennzeichnet, daß ein Vernetzungsmittel eingesetzt wird, das mindestens zwei halogenhaltige Stickstoffheterozyklen aufweist.

9. Verfahren nach Anspruch 6, dadurch gekennzeichnet, daß ein Vernetzungsmittel eingesetzt wird, das mindestens zwei Epoxidgruppen aufweist.

10. Verfahren nach Anspruch 6, dadurch gekennzeichnet, daß ein Vernetzungsmittel eingesetzt wird, das mindestens zwei Gruppen, ausgewählt aus Vinylsulfongruppen, halogenhaltigen Stickstoffheterozyklen und Epoxidgruppen, aufweist.

11. Celluloseformkörper, erhältlich nach einem Verfahren gemäß einem der Ansprüche 5 bis 10.

12. Celluloseformkörper, erhältlich nach einem der Ansprüche 4 oder 11, dadurch gekennzeichnet, daß er als Faser oder als Folie ausgebildet ist.

## Claims

1. A process for the production of a cellulose moulded body according to the amine-oxide process, wherein a suspension of cellulose in an aqueous tertiary amine-oxide is transformed into a spinnable solution, extruded through a spinneret, and the moulded body obtained is conducted through a precipitation bath, which process comprises a cross-linking reaction, said process being characterized in that
(a) a suspension containing a substance able to react with the cellulose and incorporate functional groups which are more nucleophilic than the hydroxy groups of said cellulose is employed; and/or
(b) a cellulose carrying functional groups which are more nucleophilic than said hydroxy groups of said cellulose is employed, and/or
(c) a suspension containing a polymer carrying functional groups which are more nucleophilic than said hydroxy groups of said cellulose is employed, and/or
(d) a substance capable of reacting with said cellulose and incorporating functional groups which are more nucleophilic than said hydroxy groups of said cellulose is added to said spinnable solution; and/or
(e) a polymer carrying functional groups which are more nucleophilic than said hydroxy groups of said cellulose is added to said spinnable solution.

2. A process for the production of a cellulose moulded body according to the amine-oxide process, wherein a suspension of cellulose in an aqueous tertiary amine-oxide is transformed into a spinnable solution, extruded through a spinneret and the moulded body obtained is conducted through a precipitation bath, said process being characterized in that
(a) functional groups which are more nucleophilic than the hydroxy groups of the cellulose are incorporated into the moulded body obtained, and/or
(b) said moulded body obtained is contacted with an oligomer or a polymer carrying functional groups which are more nucleophilic than said hydroxy groups of the cellulose, whereafter
said moulded body is treated with a cross-linking agent which reacts with the nucleophilic groups, with the proviso that it substantially does not react with said hydroxy groups of said cellulose.

3. A process according to any one of Claims 1 or 2, characterized in that said moulded body is dried.

4. A cellulose moulded body obtained according to a process according to one of the Claims 1, 2 or 3.

5. A process according to one of the Claims 1 or 3, characterized in that said moulded body obtained is treated with a cross-linking agent which reacts with the nucleophilic groups, with the proviso that it substantially does not react with said hydroxy groups of said cellulose.

6. A process according to one of the Claims 1, 2, 3 or 5, characterized in that said functional groups are primary or secondary amino groups or thiol groups.

7. A process according to Claim 6, characterized in that a cross-linking agent having at least two vinyl sulphone groups or their precursors is employed.

8. A process according to Claim 6, characterized in that a cross-linking agent having at least two halogen-containing nitrogen hetero rings is employed.

9. A process according to Claim 6, characterized in that a cross-linking agent having at least two epoxy groups is employed.

10. A process according to Claim 6, characterized in that a cross-linking agent having at least two groups selected from vinyl sulphone groups, halogen-containing nitrogen hetero rings and epoxy groups is employed.

11. A cellulose moulded body obtained according to one of the processes according to one of the Claims 5 to 10.

12. A cellulose moulded body obtained according to one of the Claims 4 or 11, characterized in that it is fibre or film-shaped.

## Revendications

1. Procédé destiné à la fabrication d'un corps de forme en cellulose selon le procédé aminoxyde, dans le cas duquel une suspension de cellulose est transformée dans une solution aqueuse d'un oxyde d'amine tertiaire en une solution filable, extrudée à travers une filière, et le corps de forme obtenu est passé dans un bain de précipitation, lequel procédé comportant une réaction de réticulation et étant caractérisé en ce que
(a) il est utilisé une suspension contenant une substance pouvant réagir avec la cellulose et y introduire des groupes fonctionnels, lesquels groupes sont plus fortement nucléophiles que les groupes hydroxy de la cellulose ; et/ou
(b) il est utilisé une cellulose qui porte des groupes fonctionnels, qui sont plus fortement nucléophiles que les groupes hydroxy de la cellulose ; et/ou
(c) il est utilisé une suspension contenant un polymère qui porte des groupes fonctionnels, qui sont plus fortement nucléophiles que les groupes hydroxy de la cellulose ; et/ou
(d) il est ajouté à la solution filable une substance qui peut réagir avec la cellulose et y introduire des groupes fonctionnels, lesquels groupes sont plus fortement nucléophiles que les groupes hydroxy de la cellulose ; et/ou
(e) il est ajouté à la solution filable un polymère qui porte des groupes fonctionnels qui sont plus fortement nucléophiles que les groupes hydroxy de la cellulose.

2. Procédé destiné à la fabrication d'un corps de forme en cellulose selon le procédé aminoxyde, dans le cas duquel une suspension de cellulose est transformée dans une solution aqueuse d'un oxyde d'amine tertiaire en une solution filable, extrudée à travers une filière, et le corps de forme obtenu est passé dans un bain de précipitation, caractérisé en ce que
(a) des groupes fonctionnels sont introduits dans le corps de forme obtenu, lesquels sont plus fortement nucléophiles que les groupes hydroxy de la cellulose ; et/ou
(b) le corps de forme obtenu est mis en contact avec un oligomère ou un polymère qui porte des groupes fonctionnels, qui sont plus fortement nucléophiles que les groupes hydroxy de la cellulose ;
le corps de forme étant ensuite traité avec un agent de réticulation qui réagit avec les groupes nucléophiles, mais qui globalement ne réagit pas avec les groupes hydroxy de la cellulose.

3. Procédé selon l'une des revendications 1 ou 2, caractérisé en ce que le corps de forme est séché.

4. Corps de forme en cellulose pouvant être obtenu selon un procédé suivant les revendications 1, 2 ou 3.

5. Procédé selon l'une des revendications 1 ou 3, caractérisé en ce que le corps de forme obtenu est traité avec un agent de réticulation qui réagit avec les groupes nucléophiles, mais qui globalement ne réagit pas avec les groupes hydroxy de la cellulose.

6. Procédé selon l'une des revendications 1, 2, 3 ou 5, caractérisé en ce que les groupes fonctionnels sont des groupes amino primaires ou secondaires ou des groupes thiols.

7. Procédé selon la revendication 6, caractérisé en ce qu'il est utilisé un agent de réticulation contenant au moins deux groupes vinylsulfones ou leurs précurseurs.

8. Procédé selon la revendication 6, caractérisé en ce qu'il est utilisé un agent de réticulation contenant au moins deux hétérocycles azotés halogénés.

9. Procédé selon la revendication 6, caractérisé en ce qu'il est utilisé un agent de réticulation contenant au moins deux groupes époxy.

10. Procédé selon la revendication 6, caractérisé en ce qu'il est utilisé un agent de réticulation contenant au moins deux groupes choisis parmi des groupes vinylsulfones, des hétérocycles azotés halogénés et des groupes époxy.

11. Corps de forme en cellulose pouvant être obtenu selon un procédé suivant l'une quelconque des revendications 5 à 10.

12. Corps de forme en cellulose pouvant être obtenu selon l'une quelconque des revendications 4 ou 11, caractérisé en ce qu'il est réalisé sous forme de fibre ou de feuille.
